# EUROPÄISCHE PATENTSCHRIFT

(11) **EP 1 199 825 B1**
(45) Veröffentlichungstag und Bekanntmachung des Hinweises auf die Patenterteilung: **18.10.2006**
(21) Anmeldenummer: 01124742.6
(22) Anmeldetag: 17.10.2001
(51) Int. Cl.: H04H 1/00, G08G 1/09

(54) **Rundfunkempfänger mit Chipkarte**
Radio receiver with chip card
Récepteur de radio avec carte à puce

(30) Priorität: 18.10.2000 DE 10051552
(43) Veröffentlichungstag der Anmeldung: 24.04.2002
(73) Patentinhaber: ROBERT BOSCH GMBH, 70442 Stuttgart (DE)
(72) Erfinder: Rychlak, Stefan, 31241 Ilsede (DE)

(56) Entgegenhaltungen:
- DE-A- 4 112 828
- DE-A- 4 228 692
- US-A- 6 068 183
- BOLLE M ET AL: "The receiver engine chip-set for digital audio broadcasting" 1998 URSI INTERNATIONAL SYMPOSIUM ON SIGNALS, SYSTEMS, AND ELECTRONICS. CONFERENCE PROCEEDINGS (CAT. NO.98EX167), 1998 URSI INTERNATIONAL SYMPOSIUM ON SIGNAL, SYSTEMS, AND ELECTRONICS. CONFERENCE PROCEEDINGS, PISA, ITALY, 29 SEPT.-2 OCT. 1998, Seiten 338-342, XP010316821 1998, New York, NY, USA, IEEE, USA ISBN: 0-7803-4900-8

## Beschreibung

### Technisches Gebiet

Die vorliegende Erfindung betrifft einen Rundfunkempfänger, insbesondere einen Fahrzeugempfänger, der einen Prozessor zur Decodierung von im Rundfunksignal enthaltenen Verkehrsmeldungen und eine Einrichtung zur akustischen Wiedergabe der Verkehrsmeldungen und eine Chipkarte enthält, wobei die Chipkarte einen Speicher für Daten aufweist, auf welche der Prozessor zur akustischen Wiedergabe der Verkehrsmeldungen zugreifen kann.

### Stand der Technik

Eine Chipkarte der eingangs genannten Art ist aus der DE 41 12 828 C2 bekannt. Der zur Chipkarte gehörige Rundfunkempfänger weist dabei einen Decoder auf, mit welchem ein dem Rundfunksignal aufmoduliertes digitales Signal decodiert werden kann. Das aufmodulierte digitale Signal kann insbesondere Informationen über die Verkehrssituation enthalten, welche für den Fahrer eines Kraftfahrzeuges relevant sind.

Solche Verkehrsmeldungen bestehen aus einem begrenzten Repertoire von Sätzen, in welchen als Variable lediglich Ortsangaben sowie Zeit- und/oder Längenangaben auftreten. Es ist daher gut möglich, die Verkehrsmeldungen digital zu codieren und aus einer begrenzten Menge von Grundbausteinen (Satzgerüsten und Ortsinformationen) zusammenzusetzen. Dies erlaubt es, die Verkehrsmeldungen sprachlich wiederzugeben, indem die genannten Bausteine abgespeichert und entsprechend der jeweiligen Verkehrsmeldung zusammengesetzt werden. Dabei werden gemäß der DE 41 12 828 C2 die Textbausteine der Verkehrsmeldungen in einem digitalen Speicher auf der Chipkarte abgelegt, aus welchem sie von dem Rundfunkempfänger abgerufen werden können. Der Rundfunkempfänger kann dann die Textbausteine an einer graphischen Anzeige für den Benutzer als Schrift darstellen oder alternativ über einen Sprachsynthesizer in akustischer Form wiedergeben. Auf diese Weise können durch die Chipkarte Textbausteine für Verkehrsmeldungen in unterschiedlichen Sprachen bereitgestellt werden, so dass ein Autofahrer bei einer Reise im Ausland die dortigen Verkehrsmeldungen in seiner Muttersprache angezeigt beziehungsweise akustisch wiedergegeben bekommen kann. Nachteilig hierbei ist jedoch, dass der für die akustische Wiedergabe erforderliche Einsatz eines Sprachsynthesizers sehr aufwendig ist, wobei zudem die durch einen Sprachsynthesizer erzielbare Sprachqualität begrenzt ist und der natürlichen menschlichen Sprache nicht nahe kommt. Dies kann gerade bei den in Verkehrsmeldungen vorkommenden Ortsnamen problematisch sein, so dass die akustisch wiedergegebene Nachricht unter Umständen für den Hörer nicht verständlich ist oder missverstanden wird.

US-A-6 068 183 offenbart die Möglichkeit, eine Mehrzahl audiovisueller Informationen mittels eines Chipkartenlesers auf einer Chipkarte zu speichern. Bei den Informationen handelt es sich beispielsweise um Werbebotschaften. Die gespeicherten Informationen können mittels eines Chipkartenlesers, der über Ausgabemittel, insbesondere Lautsprecher verfügt, von der Chipkarte gelesen und akustisch wiedergegeben werden.

### Darstellung der Erfindung, Aufgabe, Lösung, Vorteile

Vor diesem Hintergrund war es Aufgabe der vorliegenden Erfindung, einen Rundfunkempfänger der eingangs genannten Art derart zu verbessern, dass eine besser verständliche Sprachwiedergabe erzielt wird.

Diese Aufgabe wird durch einen Rundfunkempfänger mit den Merkmalen des unabhängigen Patentanspruchs gelöst. Vorteilhafte Ausgestaltungen sind in den Unteransprüchen enthalten.

Bei dem Rundfunkempfänger kann es insbesondere um einen in einem Kraftfahrzeug untergebrachten Rundfunkempfänger (Fahrzeugempfänger) handeln. Der Rundfunkempfänger weist einen Prozessor auf, mit welchem im Rundfunksignal enthaltene Verkehrsmeldungen decodiert werden können. Weiterhin weist der Rundfunkempfänger eine Einrichtung zur akustischen Wiedergabe der Verkehrsmeldungen auf. Die Chipkarte hat einen Speicher für digitale Daten, auf welche der Prozessor zwecks akustischer Wiedergabe der Verkehrsmeldungen zugreifen kann. Die Chipkarte ist dadurch gekennzeichnet, dass sie gespeicherte Audiodaten enthält.

Anders als beim Stand der Technik besteht die auf der Chipkarte gespeicherte Information somit nicht beziehungsweise nicht ausschließlich aus Textdaten (Zeichen), sondern die Textbausteine der Verkehrsmeldungen sind als Audiodaten abgespeichert. Diese Audiodaten enthalten das akustische Klangbild der zugeordneten Information, also zum Beispiel die in Verkehrsmeldungen vorkommenden Ortsnamen in akustischer Form. Die akustischen Daten können dabei insbesondere durch Aufzeichnung natürlicher menschlicher Sprache gewonnen worden sein, so dass sie ohne Verfälschung und mit hoher Qualität die richtige Aussprache der jeweiligen Worte beinhalten. Die aus derartigen Audiodaten, die auf natürlicher menschlicher Sprache beruhen, zusammengesetzte Verkehrsmeldung ist für den Hörer ähnlich gut wie eine von einem menschlichen Sprecher gesprochene Verkehrsmeldung verständlich. Unverständliche oder missverständliche Wiedergaben der Verkehrsmeldungen werden somit ausgeschlossen.

Gemäß einer bevorzugten Weiterbildung der Erfindung enthält die Chipkarte eine Verarbeitungseinheit zur Dekompression von komprimiert gespeicherten Audiodaten. Durch die Kompression von Audiodaten lässt sich der benötigte Speicherplatz erheblich reduzieren, so dass in einem Speicher gegebener Größe eine dementsprechend höhere Datenmenge untergebracht werden kann. Durch Integration der notwendigen Verarbeitungslogik zur Dekompression der komprimiert gespeicherten Audiodaten können dem Rundfunkempfänger die Audiodaten in dekomprimierter Form bereitgestellt werden. Dies hat den Vorteil, dass in dem Rundfunkempfänger keine Verarbeitungslogik zur Dekompression von Audiodaten vorgesehen werden muss, so dass die Chipkarte unabhängig von dem zur Kompression der Audiodaten verwendeten Verfahren einsetzbar ist. Insbesondere kann auf einer Chipkarte stets das technisch fortgeschrittenste Verfahren zur Kompression verwendet werden, da durch die zugeordnete Verarbeitungseinheit sichergestellt ist, dass die Daten dem Rundfunkempfänger in einer unmittelbar verarbeitbaren, nicht komprimierten Form zur Verfügung gestellt werden.

Die Verarbeitungslogik auf der Chipkarte kann insbesondere zur Dekompression von Audiodaten im MPEG3-Format eingerichtet sein. Hierbei handelt es sich um ein leistungsfähiges Kompressionsverfahren für Audiodaten, welches gleichzeitig eine hohe Qualität der dekomprimierten Daten gewährleistet.

Die Erfindung betrifft einen Rundfunkempfänger, insbesondere Fahrzeugempfänger, der einen Prozessor zur Decodierung von im Rundfunksignal enthaltenen Verkehrsmeldungen und eine Einrichtung zur akustischen Wiedergabe der Verkehrsmeldungen enthält, und welcher dadurch gekennzeichnet ist, dass er von einer Chipkarte der oben erläuterten Art bereitgestellte Audiodaten akustisch wiedergeben kann. Ein derartiger Rundfunkempfänger muss demnach nicht wie die aus dem Stand der Technik bekannten Rundfunkempfänger einen Sprachsynthesizer enthalten, um die Verkehrsmeldungen unter Zuhilfenahme einer Chipkarte akustisch wiedergeben zu können. Vielmehr kann er unmittelbar die von der Chipkarte bereitgestellten Audiodaten zur Wiedergabe bringen. Der Rundfunkempfänger ist demnach nicht nur durch Einsparung des Sprachsynthesizers einfacher und damit kostengünstiger, sondern mit ihm kann gleichzeitig eine wesentlich verbesserte Qualität der Sprachwiedergabe erzielt werden, wobei ein Nutzer insbesondere durch Verwendung der entsprechenden Chipkarte die Wiedergabe in seiner Muttersprache erhalten kann.

### Bester Weg zur Ausführung der Erfindung

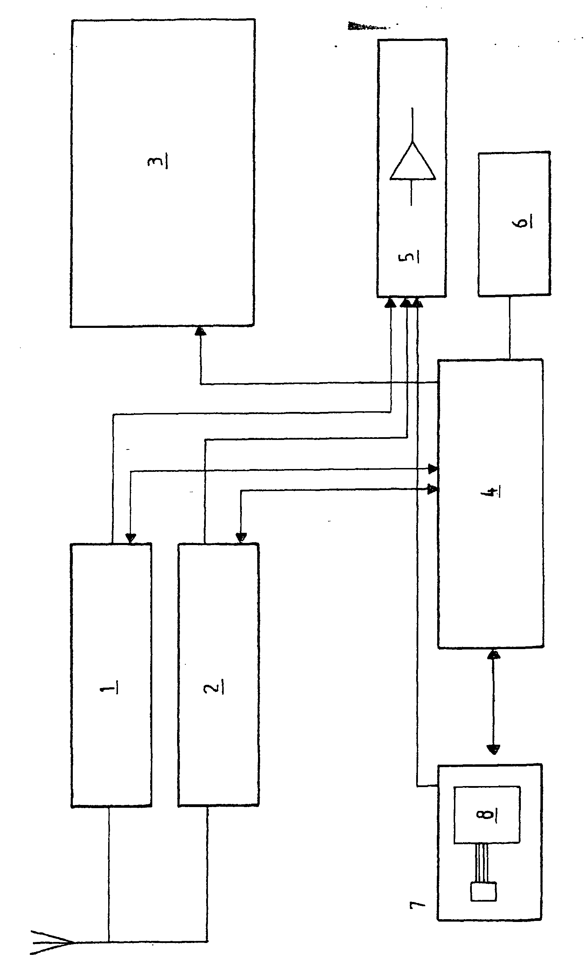

Im Folgenden wird die Erfindung mit Hilfe der Figur beispielhaft erläutert. Die einzige Abbildung zeigt schematisch die Komponenten eines Autoradios und einer darin eingesetzten erfindungsgemäßen Chipkarte.

Das in der Figur gezeigte Autoradio enthält einen Empfänger 1, welcher eingangsseitig mit einer Antenne zum Empfang von Rundfunksignalen gekoppelt ist. Der Empfänger 1 ist bidirektional mit einem Mikroprozessor 4 gekoppelt, welcher den Empfänger 1 steuert und zum Beispiel die Senderauswahl oder Einstellungen wie Lautstärke, Balance und dergleichen festlegt. Weiterhin übernimmt der Prozessor 4 die Decodierung der in dem empfangenen Rundfunksignal enthaltenen digitalen Verkehrsinformationen. Der Empfänger 1 ist ferner ausgangsseitig mit einem Verstärker 5 verbunden, über welchen das empfangene Radioprogramm akustisch wiedergegeben wird.

Durch den Mikroprozessor 4 wird die sogenannte TMC-Funktion (Datenübertragung von Verkehrsdaten) des Autoradios realisiert. Die vom Mikroprozessor 4 decodierten Verkehrsinformationen können dabei als Text auf einem Display 3 dargestellt werden. So könnte auf dem Display 3 zum Beispiel die Meldung "Stau auf der A7 zwischen Hildesheim und Hannover" erscheinen. Die TMC-Funktion ist in der Regel auf der Hauptplatine des Autoradios integriert und benötigt daher verhältnismäßig viel Layoutfläche.

Das Autoradio enthält ferner eine mit der Antenne sowie dem Mikroprozessor 4 gekoppelte Navigationseinrichtung 2, welche zusätzlich ausgangsseitig mit dem Verstärker 5 verbunden ist. Weiterhin ist der Mikroprozessor 4 mit einer Tastatur 6 verbunden, über welche Daten in den Prozessor eingegeben und zum Beispiel Funktionsauswahlen durchgeführt werden können.

Das Autoradio weist ferner eine Schnittstelle für eine Chipkarte, die sogenannte Keycard 7, auf. Eine derartige Keycard 7 wird bei vielen Autoradios als Diebstahlschutz eingesetzt, indem sie einen Code enthält, der zum Betreiben des Autoradios benötigt wird. Zur Abfrage des Codes ist die Keycard 7 nach Einschieben in das Autoradio mit dem Mikroprozessor 4 verbunden.

Erfindungsgemäß wird darüber hinaus auf der Keycard 7 im MPEG 3 Standard komprimierte Audioinformation untergebracht, wobei der entsprechende Speicher 8 auf der Keycard zusätzlich noch die notwendige Verarbeitungslogik zur Dekompression der Audiodaten enthalten kann. Die Keycard 7 enthält somit sämtliche Sprachinformationen, welche zur akustischen Wiedergabe der Verkehrsmeldungen, die vom Mikroprozessor 4 decodiert wurden, erforderlich sind. Das Autoradio wird dadurch in die Lage versetzt, komplexe TMC-Informationen in hoher Qualität akustisch wiederzugeben. Die notwendigen Schaltungen werden vorzugsweise durch COB-Technik auf die Chipkarte 7 gebracht.

Über das DSC-Menü des Autoradios kann die gewünschte Sprache eingestellt werden, wobei diese Sprache bei RDS-Geräten mit der PTY-Sprache gekoppelt sein kann. In dem Menü können alle möglichen Sprachen über ein Rollmenü angezeigt werden, aus dem eine entsprechende Sprache ausgewählt werden kann.

Während seines Betriebs empfängt das Autoradio TMC-Daten und wertet diese im Mikroprozessor 4 aus. Diese Informationen, die gegebenenfalls auf eine vom Benutzer ausgewählte Strecke beschränkt sein können, werden dann auf dem Display 3 ausgegeben. Ferner wird zu den zusammengestellten Daten die zugehörigen Sprachinformationen aus dem MPEG3-Chip 7 ausgelesen und über die akustische Wiedergabe 5 mit hoher Qualität und gut verständlich wiedergegeben. Dies ist insbesondere auch für Fremdsprachen möglich, welche entsprechend auf der Chipkarte 7 abgespeichert sein können.

Der Vorteil des erfindungsgemäßen Autoradios besteht darin, dass über die Chipkarte verschiedene Sprachen mitgeliefert werden können. Somit wird nur eine Chipkarte 7 für verschiedene Sprachen benötigt. Dies führt zu einer erheblichen Kosteneinsparung im Lager und in der Logistik. Ferner wird keine wertvolle Layoutfläche im Autoradio selbst benötigt und trotzdem die Sprachverständlichkeit verbessert.

## Patentansprüche

1. Rundfunkempfänger, insbesondere Fahrzeugempfänger, mit einem Prozessor (4) zur Decodierung von im Rundfunksignal enthaltenen Verkehrsmeldungen und einer Einrichtung (5) zur akustischen Wiedergabe der Verkehrsmeldungen und mit einem wechselbaren Speicher in Form einer Chipkarte (7),
**dadurch gekennzeichnet,**
**dass** er dazu eingerichtet ist, in Abhängigkeit der im Rundfunksignal enthaltenen Verkehrsinformationen auf der Chipkarte (7) gespeicherte Audiodaten abzurufen und diese akustisch wiederzugeben.

2. Rundfunkempfänger nach Anspruch 1, **dadurch gekennzeichnet, dass** die gespeicherten Audiodaten gesprochene Textbausteine von Verkehrsmeldungen sind.

3. Rundfunkempfänger nach Anspruch 1 oder 2,
**dadurch gekennzeichnet, dass** die Chipkarte (7) eine Verarbeitungseinheit (8) zur Dekompression von komprimiert gespeicherten Audiodaten enthält.

4. Rundfunkempfänger nach Anspruch 3,
**dadurch gekennzeichnet, dass** die Verarbeitungseinheit (8) zur Dekompression von Audiodaten im MPEG3-Format eingerichtet ist.

## Claims

1. Broadcast radio receiver, particularly a vehicle receiver, having a processor (4) for decoding traffic messages contained in the broadcast radio signal and having a device (5) for audio reproduction of the traffic messages and having a replaceable memory in the form of a chip card (7),
**characterized**
**in that** it is set up to take the traffic information contained in the broadcast radio signals as a basis for retrieving audio data stored on the chip card (7) and for audio reproduction thereof.

2. Broadcast radio receiver according to Claim 1,
**characterized in that** the stored audio data are spoken text blocks from traffic messages.

3. Broadcast radio receiver according to Claim 1 or 2,
**characterized in that** the chip card (7) contains a processing unit (8) for decompressing audio data stored in compressed form.

4. Broadcast radio receiver according to Claim 3,
**characterized in that** the processing unit (8) is set up to decompress audio data in MPEG3 format.

## Revendications

1. Récepteur radio, en particulier pour véhicule, avec un processeur (4) pour le décodage de messages de circulation contenus dans le signal radio et un dispositif (5) pour la restitution acoustique des messages de circulation, et avec une mémoire changeable sous forme de carte à puce (7),
**caractérisé en ce qu'**
il est conçu pour accéder à des données audio mémorisées sur la carte à puce (7) en fonction des informations de circulation contenues dans le signal radio et les restituer de manière acoustique.

2. Récepteur radio selon la revendication 1,
**caractérisé en ce que**
les données audio mémorisées sont des éléments de texte parlé de messages de circulation.

3. Récepteur radio selon la revendication 1 ou 2,
**caractérisé en ce que**
la carte à puce (7) contient une unité de traitement (8) pour la décompression des données audio mémorisées comprimées.

4. Récepteur radio selon la revendication 3,
**caractérisé en ce que**
l'unité de traitement (8) est conçue pour la décompression de données audio au format MPEG3.
